# EUROPEAN PATENT APPLICATION

(11) **EP 4 712 201 A1**
(43) Date of publication of application: **18.03.2026**
(21) Application number: 24880234.0
(22) Date of filing: 10.10.2024
(51) Int. Cl.: H01M 10/42, H01M 50/325, H01M 50/358, H01M 10/48, H01M 50/211, H01M 50/249, A62C 3/16, A62C 37/38, A62C 37/46

(54) **BATTERY PACK AND DEVICE INCLUDING SAME**

(30) Priority: 20.10.2023 KR 20230140913
(71) Applicant: LG Energy Solution, Ltd., Seoul 07335 (KR)
(72) Inventor: PARK, Won Kyoung, Daejeon 34122 (KR); KIM, Younggil, Daejeon 34122 (KR); KANG, Jae Hyuk, Daejeon 34122 (KR); SHIN, Jonghong, Daejeon 34122 (KR)
(74) Representative: Hoffmann Eitle
(86) International application number: PCT/KR2024/096302
(87) International publication number: WO 2025/084898

(57) **Abstract**

A battery pack according to an embodiment of the present disclosure includes a pack frame mounting a plurality of battery modules; at least one venting unit on at least one side surface of the pack frame; and at least one sonic fire extinguisher on an upper portion of the pack frame, wherein the sonic fire extinguisher is configured to generate a low frequency in a direction toward the venting unit inside of the pack frame.

## Description

### CROSS-REFERENCE TO RELATED APPLICATIONS

This application is a National Phase entry pursuant to 35 U.S.C. 371 of International Application PCT/KR2024/096302 filed October 10, 2024, which claims priority to and the benefit of Korean Patent Application No. 10-2023-0140913, filed on October 20, 2023, with the Korean Intellectual Property Office, the disclosures of which are incorporated herein by reference in their entirety.

### TECHNICAL FIELD

The present disclosure relates to a battery pack and a device including the same, and more particularly, to a battery pack and a device including the same, which are configured such that a pack frame is formed with a sonic fire extinguishing structure, thereby making it possible to extinguish fire while promoting gas and flame discharge in the event of a fire in some modules inside the battery pack.

### BACKGROUND

Secondary batteries, which are highly applicable to various products and exhibit superior electrical properties such as high energy density, or the like, are not only commonly applied to portable devices, but also universally applied to an electric vehicle or a hybrid electric vehicle and an energy storage system driven by electrical power sources. Such secondary batteries are gaining attention for their primary advantage of remarkably reducing the use of fossil fuels and not generating by-products from the use of energy, making them a new eco-friendly and energy efficient source of energy.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based batteries.

Generally, the lithium secondary battery may be classified based on the shape of the exterior material into a cylindrical or prismatic secondary battery in which the electrode assembly is embedded in a metal can, and a pouch type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of middle- or large-sized module structure which is an assembly of battery modules in which a large number of secondary batteries are connected in series or in parallel. Such a battery module has a structure in which a large number of battery cells are connected to each other in series or in parallel to form a battery cell stack, thereby improving capacity and output. In addition, a plurality of battery modules may be mounted together with various control and protection systems such as BMS (battery management system) and a cooling system to form a battery pack.

The battery pack is composed of a structure in which multiple battery modules are combined together and thus, if overvoltage, overcurrent, or overheating occurs in some of the battery modules, the safety and operating efficiency of the battery pack may be problematic. In particular, in order to improve driving distance, the battery pack capacity tends to gradually increase, and the internal energy of the pack is also increasing accordingly, and it is necessary to design a structure that satisfies the strengthened safety standards and ensures the safety of the vehicle and driver.

In relation to this, in order to prevent thermal runaway within the battery pack and thermal transmission between battery cells in advance, recently, there has been a growing need to develop a battery pack that can effectively discharge and extinguish gases and flames generated from some battery cells, thereby minimizing damage.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

It is an object of the present disclosure to provide a battery pack and a device including the same, which are configured such that a pack frame is formed with a sonic fire extinguishing structure, thereby making it possible to extinguish fire while promoting gas and flame discharge in the event of a fire in some modules inside the battery pack.

The technical objects of the present disclosure are not limited to the aforementioned objects, and other objects which are not mentioned herein should be clearly understood by those skilled in the art from the following detailed description and the accompanying drawing.

According to an embodiment of the present disclosure, there is provided a battery pack comprising: a pack frame mounting a plurality of battery modules; at least one venting unit on at least one side surface of the pack frame; and at least one sonic fire extinguisher on an upper portion of the pack frame, wherein the sonic fire extinguisher is configured to generate a low frequency in a direction toward the venting unit inside of the pack frame.

The sonic fire extinguisher is at the center of the pack frame, and the sonic fire extinguisher may be configured to generate a low frequency in a direction from the center of the pack frame toward the venting unit.

The at least one venting unit includes at least one first venting unit on one side surface of the pack frame and at least one second venting unit on the other side surface of the pack frame, the sonic fire extinguisher is between the at least one first venting unit and the at least one second venting unit, and the sonic fire extinguisher may be configured to generate a low frequency in a direction toward the at least one first venting unit and the at least one second venting unit in the inside of the pack frame, respectively.

The sonic fire extinguisher may comprise a venting unit that is configured to allows air to flow in from outside of the pack frame into the inside of the pack frame; a low frequency generator that is configured to generate a low frequency in a direction toward the venting unit in the inside of the pack frame; and a fan unit that is configured to blows air flowed into the inside of the pack frame through the venting unit in a direction toward the venting unit.

The sonic fire extinguisher may further comprise a low frequency amplifier that is configured to amplify the low frequency generated from the low frequency generator.

The venting unit is a one-way device that is configured to allow air to flow in from the outside of the pack frame toward the inside of the pack frame, and the venting unit may be a membrane, a check valve, a venting valve, or a venting plug.

The sonic fire extinguisher may comprise an outer peripheral portion extending along the upper portion of the pack frame, and a fixing unit that fixes the outer peripheral portion and the upper portion of the pack frame to each other.

The sonic fire extinguisher may comprise a fire detection unit configured to detect an occurrence of a fire in the pack frame; and a control unit that is configured to receive a fire situation occurrence signal from the fire detection unit to determine the occurrence of the fire, and is configured to operate the sonic fire extinguisher when the occurrence of the fire is determined.

The fire detection unit may be configured to detect abnormal temperature and abnormal voltage through fire detection sensors attached to each of the plurality of battery modules.

The fire detection sensor may be a thermistor.

The upper portion of the pack frame includes a protrusion portion that protrudes in a direction away from the battery module, the protrusion portion includes a flame discharge flow path configured to receive flames generated in some of the battery modules among the plurality of battery modules and discharge the flames toward the venting unit, and the sonic fire extinguisher may communicate with the flame discharge flow path.

The pack frame includes a pack bottom portion that contacts the lower surface of the battery module and a frame portion that surrounds the side surface of the battery module, the frame portion includes a side surface frame extending upward from an edge of the pack bottom portion and an internal frame located inside the side frame, and the plurality of battery modules may be partitioned from each other by the side surface frame and the internal frame.

The battery module includes a battery cell stack in which a plurality of battery cells are stacked, and both side surfaces and the upper and lower surfaces of the battery cell stack may be surrounded by the pack frame.

The battery module may include a battery cell stack in which a plurality of battery cells are stacked, and a module frame that accommodates the battery cell stack.

According to another embodiment of the present disclosure, there is provided a device comprising the above-mentioned battery pack.

According to embodiments, the battery pack of the present disclosure and the device including the same are configured such that a pack frame is formed with a sonic fire extinguishing structure, thereby making it possible to extinguish fire while promoting gas and flame discharge in the event of a fire in some modules inside the battery pack.

Effects of the present disclosure are not limited to the effects mentioned above, and additional other effects not mentioned herein will be clearly understood by those skilled in the art from the detailed description and the accompanying drawings.

### BRIEF DESCRIPTION OF THE DRAWINGS

FIG. 1 is a perspective view showing a battery pack according to one embodiment of the present disclosure.
FIG. 2 is a diagram briefly showing components of the sonic fire extinguisher of FIG. 1.
FIG. 3 is a perspective view showing a state where the upper pack frame of the battery pack of FIG. 1 is removed.
FIG. 4 is an exploded perspective view of the lower pack frame of the battery pack of FIG. 1.
FIG. 5 is a diagram showing the blowing direction of the fan unit included in the sonic fire extinguisher of FIG. 2 and the direction of low frequencies generated from the low frequency generator, based on the upper surface of the battery pack of FIG. 1.
FIG. 6 is a diagram showing the discharge direction of flames and/or gases, based on the upper surface of the battery pack of FIG. 1.
FIG. 7 is a perspective view showing a battery module according to another embodiment mounted on the battery pack of FIG. 1.
FIG. 8 is an exploded perspective view of the battery module of FIG. 7.

### DETAILED DESCRIPTION

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, a battery pack according to an embodiment of the present disclosure will be described.

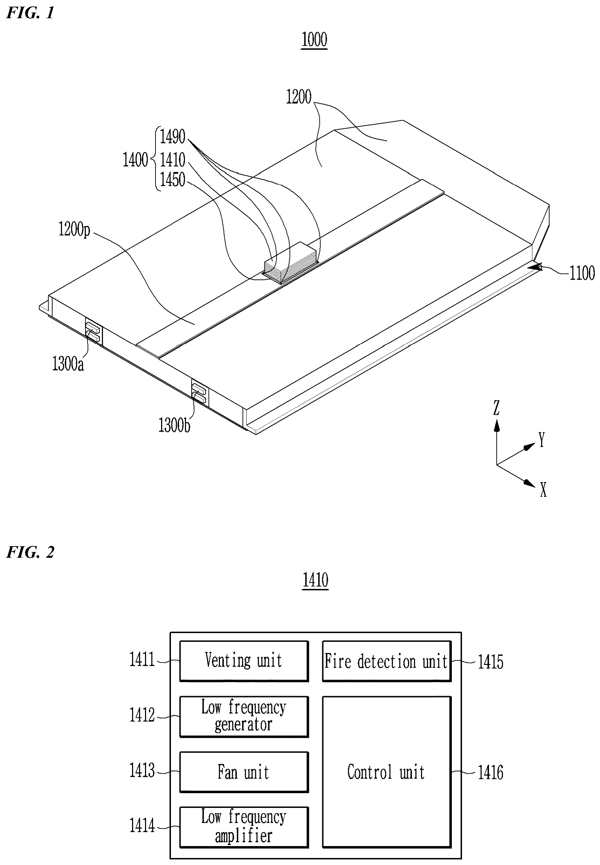

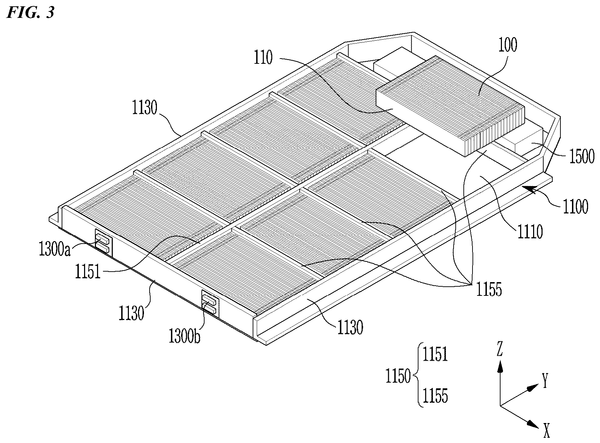

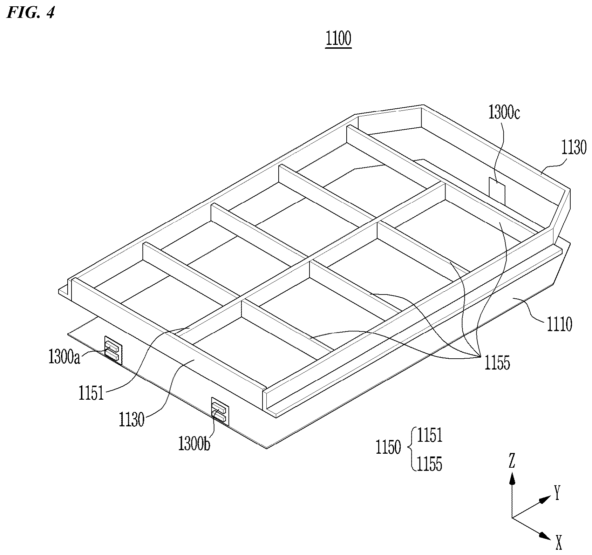

FIG. 1 is a perspective view showing a battery pack according to one embodiment of the present disclosure. FIG. 2 is a diagram briefly showing components of the sonic fire extinguisher of FIG. 1. FIG. 3 is a perspective view showing a state where the upper pack frame of the battery pack of FIG. 1 is removed. FIG. 4 is an exploded perspective view of the lower pack frame of the battery pack of FIG. 1.

Referring to FIGS. 1 and 3, a battery pack 1000 according to an embodiment of the present disclosure includes pack frames 1100 and 1200 on which a plurality of battery modules 100 are mounted; one or more venting units 1300a, 1300b and 1300c located on at least one side surface of the pack frames 1100 and 1200; and at least one sonic fire extinguisher 1400 located on the upper side of the pack frames 1100 and 1200.

Here, the pack frames 1100 and 1200 may include a lower pack frame 1100 on which a plurality of battery modules 100 are mounted, and an upper pack frame 1200 located on the upper portion of the battery module 100. Here, the lower pack frame 1100 and the upper pack frame 1200 may be joined at their mutually contacting surfaces by a method such as welding or adhesion, thereby sealing the inside of the battery pack 1000.

Referring to FIGS. 3 and 4, the pack frames 1100 and 1200 may include a pack bottom portion 1110 that comes on contact with the lower surface of the battery module 100 and a frame portions 1130 and 1150 that surrounds the side surface of the battery module. More specifically, the lower pack frame 1100 may include a pack bottom portion 1110 of the lower pack frame 1100 that comes into contact with the lower surface of the battery module 100 and frame portions 1130 and 1150 that surround the side surface of the battery module 100. Here, the pack bottom portion 1110 and the frame portions 1130 and 1150 of the lower pack frame 1100 may be integrated with each other, or may be fixed to each other by a separate fastening method such as welding or adhesion.

The frame portions 1130 and 1150 may include a side surface frame 1130 extending from the edge of the pack bottom portion 1110 toward the upper pack frame 1200 and an internal frame 1150 located inside the side frame 1130.

As an example, the frame portions 1130 and 1150 may be made of an insulating material. As an example, the frame portions 1130 and 1150 may be made of an aluminum extrusion structure. As another example, the frame portions 1130 and 1150 may be made of a dissimilar metal bonding material such as clad metal, or may be a structure including a heat insulating material such as aerogel or EPP (Expanded Polypropylenes) foam. However, the present disclosure is not limited thereto, and the frame portions 1130 and 1150 may be used without limitation as long as they are made of a heat insulating material having a predetermined rigidity.

The side surface frame 1130 may be a frame extending along the longitudinal direction (y-axis direction) and the width direction (x-axis direction) from the edge of the lower pack frame 1100.

The inner frame 1150 may include a horizontal beam 1151 extending along the longitudinal direction (y-axis direction) of the lower pack frame 1100 and at least two vertical beams 1155 extending along the width direction (x-axis direction) of the lower pack frame 1100. As an example, the vertical beam 1155 may include a pair of first vertical beams and second vertical beams with the horizontal beam 1151 interposed between them, so that the first vertical beam and the second vertical beam may be attached to the horizontal beam 1151, respectively. Here, at least two vertical beams 1155 and horizontal beams 1151 may be integrated with each other, or may be fixed to each other by a separate fastening method such as welding or adhesion.

More specifically, the length of the horizontal beam 1151 and the vertical beam 1155 included in the internal frame 1150, and the spacing between the vertical beams 1155 adjacent to each other among at least two vertical beams 1155, etc. can be adjusted according to the size of the battery module 100.

Therefore, in the battery pack 1000 according to the present embodiment, a plurality of battery modules 100 can be partitioned from each other by the side surface frame 1130 and the internal frame 1150. More specifically, the plurality of battery modules 100 can be located spaced apart from each other by the side surface frame 1130 and the internal frame 1150, and even if an ignition phenomenon occurs in some battery modules 100, a heat propagation phenomenon between adjacent battery modules 100 can be effectively prevented.

Referring to FIG. 1, in the battery pack 1000 according to the present embodiment, the sonic fire extinguisher 1400 may include a main body 1410, an outer peripheral portion 1450 extending along the upper portion of the pack frames 1100 and 1200, and a fixing portion 1490 that fixes the outer peripheral portion 1450 and the upper portion of the pack frames 1100 and 1200 to each other.

More specifically, the outer peripheral portion 1450 may be formed on the bottom portion of the main body 1410. Further, the outer peripheral portion 1450 may extend along the upper portion of the pack frames 1100 and 1200 with a width sufficient to allow the fixing portion 1490 to be disposed therein. As an example, the fixing portion 1490 may be a fixing member such as a bolt. As another example, the sonic fire extinguisher 1400 may have a structure in which the fixing portion 1490 is omitted, wherein the lower surface of the outer peripheral portion 1450 and the upper portion of the pack frames 1100 and 1200 may be joined to each other by a method such as welding or adhesion.

The battery pack 1000 according to the present embodiment may include one or more venting units 1300a, 1300b and 1300c located on one side surface of the pack frames 1100 and 1200. More specifically, one or more venting units 1300a, 1300b and 1300c may be formed on one side surface of the lower pack frame 1100.

As an example, the battery pack 1000 according to the present embodiment may be configured such that one or more first venting units 1300a and 1300b are formed on one side surface of the lower pack frame 1100, and the one or more first venting units 1300a and 1300b may be spaced apart at a predetermined interval as shown in FIGS. 3 and 4. Further, the battery pack 1000 according to the present embodiment may be configured such that a second venting unit 1300c is formed on the other side surface of the lower pack frame 1100, and the second venting unit 1300c may be formed at the center of the other side surface of the lower pack frame 1100 as shown in FIG. 4. However, the position and number of the venting units 1300a, 1300b and 1300c are not limited thereto, and any position and number that can effectively discharge flames and/or gases generated inside the battery pack 1000 to the outside may be included in the present embodiment.

The venting units 1300a, 1300b and 1300c may be ruptured when the pressure inside the battery pack 1000 reaches a certain level or higher. More specifically, the venting units 1300a, 1300b and 1300c may include a rupture surface (not shown) configured to rupture when the pressure of the inflowing gas reaches a certain level or higher, like a rupture disc. However, the structure of the venting units 1300a, 1300b and 1300c is not limited thereto, and any configuration that allows the internal gas to be discharged to the outside by communicating with one side surface of the pack frames 1100 and 1200 may be included in the present embodiment.

In the battery pack 1000 according to the present embodiment, the sonic fire extinguisher 1400 generates a low frequency in a direction toward the venting units 1300a, 1300b and 1300c inside the pack frames 1100 and 1200. As an example, as shown in FIG. 1, in the battery pack 1000 according to the present embodiment, the sonic fire extinguisher 1400 is located at the center of the pack frames 1100 and 1200, and the sonic fire extinguisher 1400 can generate a low frequency in a direction toward the venting units 1300a, 1300b and 1300c at the center of the pack frames 1100 and 1200.

The sonic fire extinguisher 1400 is located between one or more first venting units 1300a and 1300b and one or more second venting units 1300c, and the sonic fire extinguisher 1400 can generate low frequencies in the direction toward one or more first venting units 1300a and 1300b and one or more second venting units 1300c inside the pack frames 1100 and 1200.

As a result, the battery pack 1000 according to the present embodiment can effectively discharge gases and/or flames toward the venting units 1300a, 1300b and 1300c while minimizing the reaction between oxygen and flame with the low frequency generated from the sonic fire extinguisher 1400, when a cell event such as a fire occurs in some battery modules 100 mounted inside the battery pack 1000.

Referring to FIG. 1, in the battery pack 1000 according to the present embodiment, the upper portion of the pack frames 1100 and 1200 may include a protrusion portion 1200p protruding toward the outside of the pack frames 1100 and 1200. More specifically, in the battery pack 1000 according to the present embodiment, the upper pack frame 1200 may include a protrusion portion 1200p protruding in a direction away from the battery module. Here, the protrusion portion 1200p may be built in with a flame discharge path through which flames generated in some of the plurality of battery modules 100 are discharged toward the venting units 1300a, 1300b and 1300c. That is, the protrusion portion 1200p enables the space spaced apart from the upper portions of the plurality of battery modules 100 to function as the flame exhaust flow path. In addition, as shown in FIG. 1, the sonic fire extinguisher 1400 can communicate with the flame discharge flow path built into the protrusion portion 1200p.

Thereby, when a cell event such as a fire occurs in some of the battery modules 100 mounted inside the battery pack 1000, the battery pack 1000 according to the present embodiment enables gas and/or flame to flow through the flame discharge flow path built into the protrusion portion 1200p, thereby preventing gases and/or flames from being exposed to the outside.

In addition, since the flame discharge flow path built into the protrusion portion 1200p and the sonic fire extinguisher 1400 are communicated to each other, so that the low frequency generated by the sonic fire extinguisher 1400 can effectively discharge gas and/or flame toward the venting units 1300a, 1300b and 1300c while minimizing the reaction between the oxygen flowing in the flame discharge flow path and the flame.

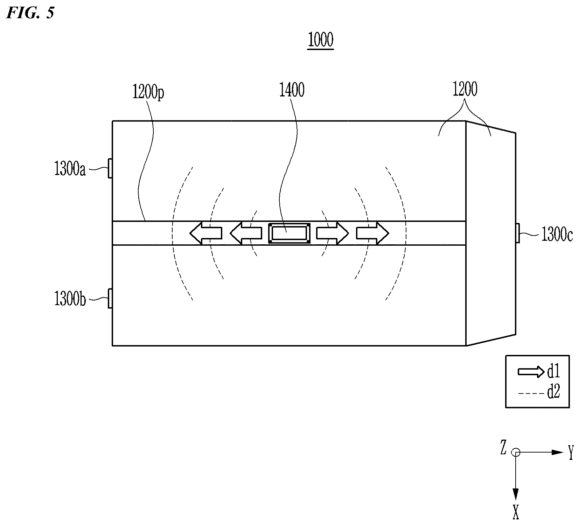

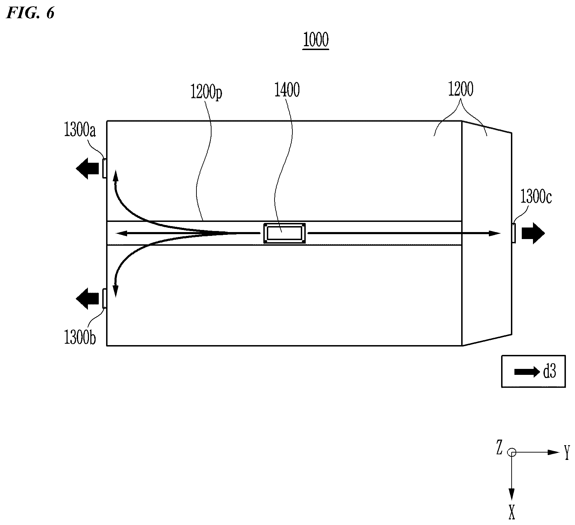

FIG. 5 is a diagram showing the blowing direction of the fan unit included in the sonic fire extinguisher of FIG. 2 and the direction of low frequencies generated from the low frequency generator, based on the upper surface of the battery pack of FIG. 1. FIG. 6 is a diagram showing the discharge direction of flames and/or gases, based on the upper surface of the battery pack of FIG. 1.

Referring to FIGS. 1 and 2, the main body 1410 of the sonic fire extinguisher 1400 may include a venting unit 1411 that allows air to flow in from the outside of the pack frames 1100 and 1200 into the inside of the pack frames 1100 and 1200; a low frequency generator 1412 that generates low frequency in a direction toward the venting units 1300a, 1300b and 1300c inside the pack frames 1100 and 1200; and a fan unit 1413 that blows air flowed into the inside of the pack frames 1100 and 1200 through the venting unit 1411 toward the venting units 1300a, 1300b and 1300c.

More specifically, the venting unit 1411 may be a one-way device that can maintain the airtightness of the battery pack 1000 while allowing air to flow in only from the outside of the pack frames 1100 and 1200 toward the inside of the pack frames 1100 and 1200. As an example, the venting unit 1411 may be a membrane, a check valve, a venting valve, or a venting plug. However, the venting unit 1411 is not limited thereto, and can be included in this embodiment as long as it is a component that can allow outside air to flow into the inside of the pack frames 1100 and 1200 when a cell event such as a fire occurs inside the battery pack 1000.

Further, the low frequency generator 1412 can generate a low frequency capable of suppressing a fire. More specifically, the low frequency generator 1412 can generate a low frequency having a specific frequency, and can generate a low frequency having a frequency of 100 Hz or less. As an example, the low frequency generator 1412 can generate a low frequency having a frequency of 10 Hz or more and 100 Hz or less.

In addition, the main body 1410 of the sonic fire extinguisher 1400 may further include a low frequency amplifier 1414 that amplifies the low frequency generated from the low frequency generator 1412. More specifically, the low frequency amplifier 1414 may amplify the low frequency generated from the low frequency generator 1412 to a predetermined level.

Therefore, in the battery pack 1000 according to the present embodiment, the low frequency generated from the sonic fire extinguisher 1400 prevents or blocks contact between the flame and oxygen, thereby extinguishing the fire occurring inside the battery pack 1000. In addition, since the fire is extinguished with the low frequency generated from the sonic fire extinguisher 1400, there is an advantage in that the internal components of the battery pack 1000 may not be damaged or destroyed unlike conventional fire extinguishing devices that spray a fire extinguishing liquid.

In addition, air flowed into the pack frames 1100 and 1200 through the venting unit 1411 can flow through the flame discharge flow path which is built into the protrusion portion 1200p formed on the upper portion of the pack frames 1100 and 1200, and the fan unit 1413 can allow air flowed into the flame discharge flow path to blow in a direction toward the venting units 1300a, 1300b and 1300c. As an example, the fan unit 1413 may be a fan or blower component generally used for blowing air.

Referring to FIGS. 1, 2, 5, and 6, in the battery pack 1000 according to the present embodiment, the fan unit 1413 can blow air inside the flame discharge flow path in a first direction d1, and the low frequency generator 1412 included in the sonic fire extinguisher 1400 can generate a low frequency in a second direction d2. Further, the gas and/or flame within the flame discharge flow path with which the sonic fire extinguisher 1400 is communicated can move along a third direction d3. Here, the first direction d1 to the third direction d3 can all be directions from the sonic fire extinguisher 1400 toward the venting units 1300a, 1300b and 1300c.

As a result, in the battery pack 1000 according to the present embodiment, when a cell event such as a fire occurs in some of the battery modules 100 mounted inside the battery pack 1000, the low frequency generator 1412 generates a low frequency in the direction d2 from the fire extinguisher 1400 toward the venting units 1300a, 1300 and 1300c, thereby preventing or blocking contact between the flame and oxygen and weakening or extinguishing the flame. Further, the fan unit 1413 blows air in the direction d1 from the sonic fire extinguisher 1400 toward the venting units 1300a, 1300b and 1300c, so that the gas and/or flame flowing through the flame discharge flow path built into the protrusion portion 1200p can be discharged more smoothly along the third direction d3.

That is, since the battery pack 1000 according to the present embodiment includes a sonic fire extinguisher 1400, the flame generated inside the battery pack 1000 is effectively extinguished, and the gas generated inside the battery pack 1000 is effectively discharged to the outside, which minimizes damage to the driver of the vehicle to which the battery pack 1000 is attached and ensures sufficient evacuation time for the driver.

Referring to FIG. 2, the main body 1410 of the sonic fire extinguisher 1400 may further include a fire detection unit 1415 that detects whether a fire has occurred inside the pack frames 1100 and 1200; and a control unit 1416 that receives a fire situation occurrence signal from the fire detection unit 1415 to determine whether a fire has occurred, and operates the sonic fire extinguisher when a fire situation is determined.

More specifically, the fire detection unit 1415 can detect abnormal temperature and abnormal voltage through fire detection sensors attached to each of the plurality of battery modules 100. As an example, the fire detection sensor may be a thermistor. However, the fire detection unit 1415 is not limited thereto, and may include a sensor that detects smoke generated by a fire, infrared rays or ultraviolet rays emitted from the light of a fire, etc.

Referring to FIG. 3, in the battery pack 1000 according to the present embodiment, the electric unit 1500 may be equipped with a BMS (Battery Management System) module that monitors and controls the operation of other electric components and battery modules. Here, the BMS module may be electrically connected to the plurality of battery modules 100.

That is, the BMS module mounted on the electric unit 1500 receives transmission of voltage data or thermal (temperature) data of a plurality of battery modules 100 acquired from the fire detection sensor, and the fire detection unit 1415 can detect whether a fire has occurred in the battery module 100 based on the temperature and/or voltage data of the plurality of battery modules 100 from the BMS module.

In addition, the control unit 1416 may include one or more of a CPU (Central Processing Unit), a RAM (Random Access Memory), a GPU (Graphics Processing Unit), one or more microprocessors, and other electronic components that can process input data according to predetermined logic. As an example, the control unit 1416 may perform various processing such as developing a process for operating the sonic fire extinguisher 1400 based on a fire occurrence signal acquired from the fire detection unit 1415 on the RAM and controlling the operation of the sonic fire extinguisher 1400 according to the developed program.

Thereby, the battery pack 1000 according to the present embodiment can quickly detect whether a fire has occurred through the fire detection unit 1415 when a cell event such as a fire occurs in some of the battery modules 100 mounted inside the battery pack 1000, and the control unit 1416 can quickly operate the sonic fire extinguisher 1400 based on the detected signal, thereby effectively dealing with the risk of fire in the battery pack 1000.

Referring to FIG. 3, in the battery pack 1000 according to the present embodiment, the battery module 100 includes a battery cell stack in which a plurality of battery cells 110 are stacked. The battery cell 110 is preferably a pouch-type battery cell. As an example, the battery cell 110 may be produced by housing the electrode assembly in a pouch case of a laminate sheet including a resin layer and an inner layer, and then heat-sealing a sealing portion of the pouch case. Such a battery cell 110 may be formed in a rectangular sheet-like structure. The battery cells 110 may be configured by a plurality of numbers, and the plurality of battery cells 110 are stacked so as to be electrically connected to each other, thereby forming a battery cell stack. Here, the number of battery cells constituting the battery cell stack 110 may be adjusted according to circumstances.

Further, both side surfaces and the upper and lower surfaces of the battery cell stack may be surrounded by the pack frames 1100 and 1200. In other words, in the battery pack 1000 according to the present embodiment, both side surfaces and the upper and lower surfaces of the battery cell stack included in the battery module 100 may directly face the pack frames 1100 and 1200.

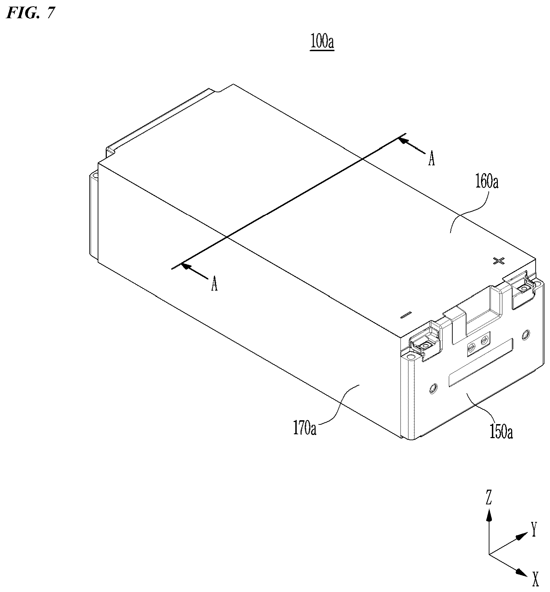

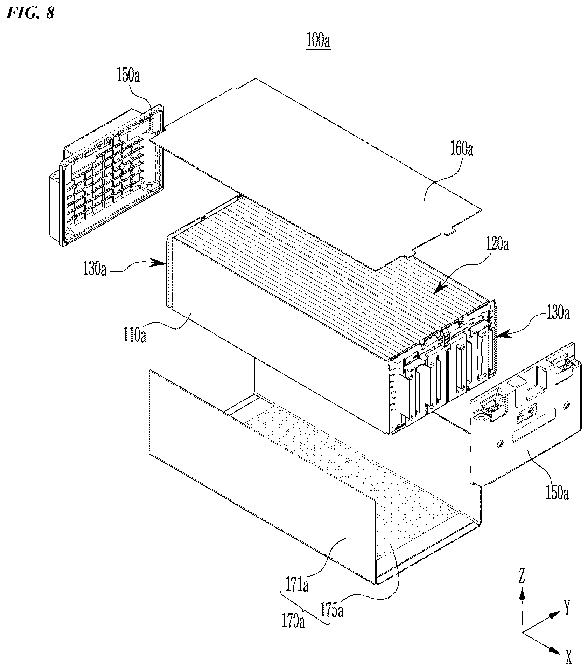

More specifically, the battery module 100 may have a structure in which at least some of the components, such as the module frames 160a and 170a, the end plate 150a, and the busbar frame 130a, are omitted, unlike the battery module 100a of FIGS. 7 and 8 described below. In other words, the battery module 100 may have a structure in which the components in the battery module unit are minimized. As an example, unlike the battery module 100a of FIGS. 7 and 8 described below, the battery module 100 may have a structure in which the module frames 160a and 170a and/or the end plate 150a are omitted.

Therefore, the battery pack 1000 according to the present embodiment may be configured to omits at least some of the components of the battery module 100, thereby further increasing the space utilization rate inside the battery pack 1000 while reducing the weight of the battery pack 1000.

FIG. 7 is a perspective view showing a battery module according to another embodiment mounted on the battery pack of FIG. 1. FIG. 8 is an exploded perspective view of the battery module of FIG. 7.

Referring to FIGS. 3, 7 and 8, in a battery pack 1000 according to another embodiment of the present disclosure, a plurality of battery modules 100a may be mounted on the pack frames 1100 and 1200, and other configurations may be described in the same manner as described above.

Referring to FIGS. 3, 7 and 8, a plurality of battery modules 100a included in a battery pack 1000 according to the present embodiment may be mounted on a lower pack frame 1100. More specifically, a plurality of battery modules 100a may be mounted in areas partitioned by a side surface frame 1130 and an internal frame 1150 as shown in FIGS. 3 and 4, respectively. However, the arrangement direction of the battery modules 100a is not limited thereto and may be appropriately changed as necessary.

As an example, the battery module 100a includes a battery cell stack 120a in which a plurality of battery cells 110a are stacked, and module frames 160a and 170a that accommodate the battery cell stack 120a, as shown in FIGS. 7 and 8.

The module frames 160a and 170a may include an upper cover 160a and a lower frame 170a. Further, it includes a thermally conductive resin layer 175a located between the battery cell stack 120a and the lower portion of the module frames 160a and 170a.

Here, the lower frame 170a may include a bottom portion and two side surface portions extending upward from both end portions of the bottom portion. At this time, the bottom portion may cover the lower surface of the battery cell stack 120a, and the side surface portion may cover the side surface of the battery cell stack 120a. The upper cover 160a may be joined to the lower frame 170 by welding or the like in the state where the corresponding corner portions are in contact with each other, thereby forming a structure that covers the upper, lower, left, and right sides of the battery cell stack 120a. For this purpose, the upper cover 160a and the lower frame 170a may be made of a metal material having a predetermined strength.

As another example, although not shown in FIGS. 8 and 9, the module frames 160a and 170a may be replaced with a mono-frame in the form of a metal plate in which the upper, lower, and both side surfaces are integrated. As another example, the module frames 160a and 170a may be replaced with two L-shaped frame joining forms. As another example, the module frames 160a and 170a may be replaced with a frame having a 4-plate structure in which an upper plate, a lower plate, a left plate, and a right plate are combined. However, the present embodiment is not limited thereto, and any frame that can protect the internal components of the battery module 100a may be applied to the present embodiment.

Further, the battery module 100a further includes a busbar frame 130a located on the front and rear surfaces of the battery cell stack 120a, and an end plate 150a covering the busbar frame 130a. Here, a busbar (not shown) electrically connected to the battery cell stack 120 may be located on the busbar frame 130a. Thereby, the end plate 150a can physically protect the battery cell stack 120 and other electrical components from external impact.

Thereby, in the battery pack 1000 according to the present embodiment, since the front and rear surfaces and both side surfaces of the battery cell stack 120a are covered by the module frames 160a and 170a and the end plate 150a, the battery cells 110a included in the battery cell stack 120a can be protected from external impact. In addition, when a cell event such as a fire occurs in some of the battery cells 110a in the battery module 100a, heat transfer to other adjacent battery modules 100a can be relatively slowed down, and the safety of the battery module 100a and the battery pack 1000 can be further improved.

A device according to another embodiment of the present disclosure includes the battery pack described above. Such a device can be applied to a vehicle means such as an electric bicycle, an electric vehicle, or a hybrid vehicle, but the present disclosure is not limited thereto, and is applicable to various devices that can use a battery module and a battery pack comprising the same, which is also falls under the scope of the present disclosure.

While the embodiments of the present disclosure have been described in detail, the technical scope of the present disclosure is not limited to the embodiments, and also includes various modifications and improvements made by one of ordinary skill in the art using the concepts defined in the claims attached therewith.

## Claims

1. A battery pack comprising:
a pack frame mounting a plurality of battery modules;
at least one venting unit on at least one side surface of the pack frame; and
at least one sonic fire extinguisher on an upper portion of the pack frame,
wherein the sonic fire extinguisher is configured to generate a low frequency in a direction toward the venting unit inside of the pack frame.

2. The battery pack according to claim 1, wherein:
the sonic fire extinguisher is at the center of the pack frame, and
the sonic fire extinguisher is configured to generate a low frequency in a direction from the center of the pack frame toward the venting unit.

3. The battery pack according to claim 1, wherein:
the at least one venting unit includes at least one first venting unit on one side surface of the pack frame and at least one second venting unit on the other side surface of the pack frame,
the sonic fire extinguisher is between the at least one first venting unit and the at least one second venting unit, and
the sonic fire extinguisher is configured to generate a low frequency in a direction toward the at least one first venting unit and the at least one second venting unit in the inside of the pack frame, respectively.

4. The battery pack according to claim 1, wherein:
the sonic fire extinguisher comprises,
a venting unit configured to allow air to flow in from outside of the pack frame into the inside of the pack frame;
a low frequency generator configured to generate a low frequency in a direction toward the venting unit inside of the pack frame; and
a fan unit configured to blow air flowed into the inside of the pack frame through the venting unit in a direction toward the venting unit.

5. The battery pack according to claim 4, wherein:
the sonic fire extinguisher further comprises a low frequency amplifier configured to amplify the low frequency generated from the low frequency generator.

6. The battery pack according to claim 4, wherein:
the venting unit is a one-way device configured to allow air to flow in from the outside of the pack frame toward the inside of the pack frame, and
the venting unit is a membrane, a check valve, a venting valve, or a venting plug.

7. The battery pack according to claim 4, wherein:
the sonic fire extinguisher comprises,
an outer peripheral portion extending along the upper portion of the pack frame, and
a fixing unit that fixes the outer peripheral portion and the upper portion of the pack frame to each other.

8. The battery pack according to claim 1, wherein:
the sonic fire extinguisher comprises,
a fire detection unit configured to detect an occurrence of fire in the pack frame; and
a control unit that is configured to receive a fire situation occurrence signal from the fire detection unit to determine the occurrence of the fire, and is configured to operate the sonic fire extinguisher when the occurrence of the fire is determined.

9. The battery pack according to claim 8, wherein:
the fire detection unit is configured to detect abnormal temperature and abnormal voltage with fire detection sensors attached to each of the plurality of battery modules.

10. The battery pack according to claim 9, wherein:
the fire detection sensor is a thermistor.

11. The battery pack according to claim 1, wherein:
the upper portion of the pack frame includes a protrusion portion that protrudes in a direction away from the battery module,
the protrusion portion includes a flame discharge flow path configured to receive flames generated in some of the battery modules among the plurality of battery modules and discharge the flames toward the venting unit, and
the sonic fire extinguisher communicates with the flame discharge flow path.

12. The battery pack according to claim 1, wherein:
the pack frame includes a pack bottom portion that contacts the lower surface of the battery module and a frame portion that surrounds the side surface of the battery module,
the frame portion includes a side surface frame extending upward from an edge of the pack bottom portion and an internal frame located inside the side frame, and
the plurality of battery modules are partitioned from each other by the side surface frame and the internal frame.

13. The battery pack according to claim 12, wherein:
the battery module includes a battery cell stack in which a plurality of battery cells are stacked, and
both side surfaces and the upper and lower surfaces of the battery cell stack are surrounded by the pack frame.

14. The battery pack according to claim 12, wherein:
the battery module includes a battery cell stack in which a plurality of battery cells are stacked, and a module frame that accommodates the battery cell stack.

15. A device comprising the battery pack according to claim 1.
